# EUROPEAN PATENT APPLICATION

(11) **EP 1 524 525 A1**
(43) Date of publication of application: **20.04.2005**
(21) Application number: 04256309.8
(22) Date of filing: 13.10.2004
(51) Int. Cl.: G01N 35/00

(54) **Moving evaporation control cover**

(30) Priority: 14.10.2003 US 684599
(71) Applicant: Ortho-Clinical Diagnostics, Inc., Rochester, New York 14626 (US)
(72) Inventor: Jacobs, Merrit, Fairport, NY 14450 (US)
(74) Representative: Mercer, Christopher Paul

(57) **Abstract**

A moving evaporation control cover for at least one fluid containing receptacle for use in a clinical analyzer includes: a pliable cover capable forming a sealing relationship with the fluid containing receptacle, wherein said cover moves with said receptacle; and one or more rollers in contact with the pliable cover. Preferably, the receptacle is a cuvette for use in a diagnostic or chemical analyzer.

## Description

### BACKGROUND OF THE INVENTION

### Field of the Invention

The present invention relates to evaporation control covers for fluid containing receptacles particularly, particularly for cuvettes in diagnostic analyzers.

### Description of the Related Art

The precision of many analysis, e.g., blood chemistry assays, immunodiagnostic assays, is dependent on controlling the temperature of the sample being measured, particularly during the incubation process. This is particularly true of enzymatic reactions (e.g., gentamicin assay). When the analysis uses a fluid containing receptacle that is open, such as a cuvette as the test container, one factor that effects the temperature is evaporative cooling effect. Maintaining temperature by controlling evaporative cooling is done by either increasing the humidity in the surrounding environment, or by sealing the receptacle to reduce the rate of evaporation. If this factor is not controlled the temperature of the fluid in the receptacle can be shifted by greater than 1 degree C. The temperature of the fluid in the receptacle changes as a function of ambient humidity, air flow above the fluid and fluid surface area. The evaporative cooling effect is eliminated when the receptacle is sealed, as long as it can be sealed for the full incubation period, or at least reduced if it can be sealed for most of the incubation process.

The use of a cover to control evaporation is known in the art. See, e.g., U.S. Patent Nos. 4,961,906 and 5,646,046. However, in known analyzers, the cuvette cannot be adequately sealed during certain processes in the analysis, such as during the incubation process, where the sample is heated and more vulnerable to evaporation. In controlling evaporation during incubation, conventional processes use a flat plate resting on top of the cuvettes. The cuvettes move back and forth below the fixed cover or plate. Unfortunately this has the potential of generating dirt and cross contamination between the cuvettes. The cover can be heated to eliminate condensation on the cover but this does not prevent carryover or dirt effects.

The use of a flat plate also has less than desirable evaporation control. This is because the interface between the cover and the cuvette is constantly moving. This type of seal is not adequate unless there is an additional material, such as a viscous liquid to seal the interface, which in itself can give rise to other problems, such as contamination by the sealing liquid.

### SUMMARY OF THE INVENTION

One object of the invention is to overcome the disadvantages of the known art described above. Another object of the invention is to provide an evaporation control cover that is capable of moving with the receptacle and which provides greater control over evaporation than the known art. Another object of the invention is to provide a clinical analyzer that includes an evaporation control cover having greater control over evaporation, particularly in the incubation section of the analyzer. Another object of the invention is to provide a method of eliminating or reducing evaporation from a fluid containing receptacle, particularly in an incubator section of a clinical analyzer.

The foregoing and further objects of the invention are accomplished according to one aspect of the invention that provides a moving evaporation control cover for at least one fluid containing receptacle for use in a clinical analyzer, which includes: a pliable cover capable forming a sealing relationship with the fluid containing receptacle, wherein said cover moves with said receptacle; and one or more rollers in contact with the pliable cover. According to another aspect of the invention there has been provided, a moving evaporation control cover and fluid containing receptacle, which includes: at least one fluid containing receptacle; a pliable cover capable forming a sealing relationship with the fluid containing receptacle, wherein the cover moves with the receptacle; one or more rollers in contact with the pliable cover; and at least one of: a drive for moving the pliable cover; and a drive for moving the fluid containing receptacle. In a preferred embodiment, the receptacle is a cuvette for use in a diagnostic or chemical analyzer.

According to another aspect of the invention, there has been provided a clinical analyzer, which includes: a cuvette conveying station for moving one or more cuvettes through the analyzer; a metering station for metering sample and/or reagents into the cuvettes; an analyzer for analyzing the sample in the cuvettes; and an incubator for incubating a sample in the cuvettes. The incubator includes, a pliable moving evaporation control cover capable of forming a sealing relationship with the cuvette containing the sample being incubated, and one or more guides in contact with the pliable cover to support and control the direction of the cover.

According to yet another aspect of the invention, there has been provided a method of eliminating or reducing evaporation from a fluid containing receptacle in an incubator of a clinical analyzer. The method includes: providing a fluid containing receptacle having a sample to be analyzed in an incubator of a clinical analyzer; providing a pliable cover for the fluid containing receptacle; engaging the pliable cover and receptacle in a fluid sealing relationship with one another; moving the sealed cover and receptacle a predetermined distance; disengaging the cover and receptacle.

Further objects, features and advantages of the present invention will be apparent to those skilled in the art from detailed consideration of the preferred embodiments that follow.

### BRIEF DESCRIPTION OF THE DRAWINGS

Figure 1 is a schematic diagram showing a side view of a moving evaporation cover and fluid containing receptacle according to a preferred embodiment of the present invention.
Figure 2 is a schematic diagram showing a side view of a moving evaporation control cover and fluid containing receptacle according to another embodiment of the present invention.
Figure 3 is an end view of the incubator block taken along line III-III of Figure 2.
Figure 4 is a top perspective view of a clinical analyzer that can include the moving evaporation control cover according to the present invention.

### DETAILED DESCRIPTION OF PREFERRED EMBODIMENTS

The present invention is broadly directed to a moving evaporation control cover that includes a pliable cover capable of forming a sealing relationship with the fluid containing receptacle(s) being covered. The cover also includes guides, preferably one or more rollers that contact the pliable cover to control the direction and positioning of the cover. As described above, the present invention is particularly useful for controlling the evaporation from cuvettes used in incubators of clinical analyzers. Unlike known covers as described above, where there is a sliding action between the cover and the receptacle, in the present invention the cover moves with the receptacle. This eliminates or substantially reduces the potential of wear particles since there is no sliding interface directly above the receptacle. It also maintains better evaporation control by providing a compliant seal between the receptacle and the cover. In those embodiments, where the cover is used in a clinical analyzer, both the improved evaporation control and the reduced risk of carryover of fluids and particulates lead to improved analysis performance. In those embodiments where the moving evaporation control cover is used in an incubator section of a clinical analyzer, the moving evaporation control cover is capable of sealing the cuvette for the entire time the cuvette is in the incubator section since the cover is capable of moving with the cuvette.

Another advantage of the present invention provides evaporation control without the active mechanisms required by known designs, such as additional electrical or software control systems. This broadens the use of the present invention to a wide range of devices, such as diagnostic analyzers. Other uses could be on any quantitative chemical analysis system using cuvettes, for example, a forensic analyzer or an analyzer used for drug discovery or research. Also a cover like this could be used to control evaporation on thin film slides or microliter plates.

In a preferred embodiment, the sealing relationship is achieved by using a pliable cover, which is a continuous belt or non-continuous sheet. The cover can be made of any material capable of forming a sealing relationship with the receptacle that is either fluid tight or at least reduces the transmission of fluid from the receptacle. Preferably, the material is compressible and deflectable to a certain extent. An ideal material is an elastomeric polymer such as a rubber (e.g., polybutadiene, ethylene/propylene, etc.). Other suitable rubbers are described in *Rubber Technology,* 2^{nd} edition, 1973, Van Nostrand Reinhold Company edited by Maurice Morton.

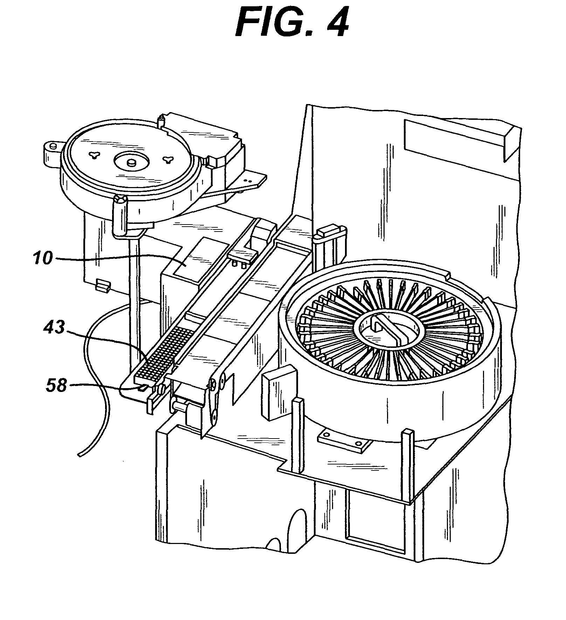

In those embodiments where the cover is a sheet that is unwound from a roller (see, e.g., the embodiment described in Figure 3), the leading edge of the sheet includes a mechanism to attach the sheet to the leading edge of the receptacle or receptacle holder. The mechanism can be any suitable structure capable of such an attachment. For example, the mechanism can be a button/hook and slot structure as described in the embodiment of Figure 3. Alternatively, the mechanism can be a Velcro® attachment. Also, while the cover is this embodiment is described as a sheet, it should be understood that the sheet can be of the same material and have the same thickness and width as the endless belt embodiment.

The moving evaporator control cover also includes one or more guides that contact the cover. The guide(s) can perform several functions. Broadly, the guide(s) help to control the placement of the cover and change the direction of the cover. The guides can be guide rails or plate that are curved to change the direction of the cover and allow the cover to wrap around it.

In a preferred embodiment, the guides are rollers. In those embodiments where the cover is not continuous and is unwound from the roller, then the roller also acts as a source of cover that is extended over the top of the receptacle. In those embodiments where the cover is a continuous belt at least one of the rollers can be driven to move the cover in this case requiring that the speed of the belt and the incubator be matched. The roller also acts to reverse the direction when the belt is endless.

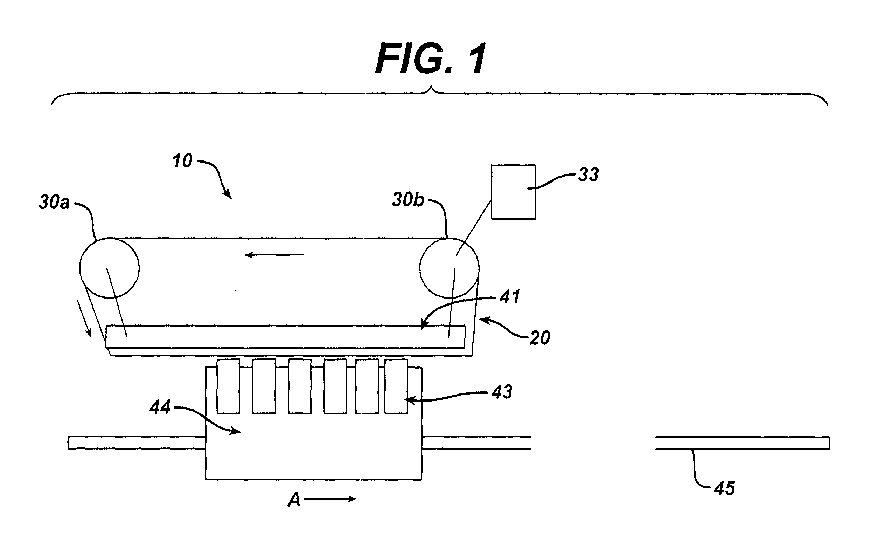

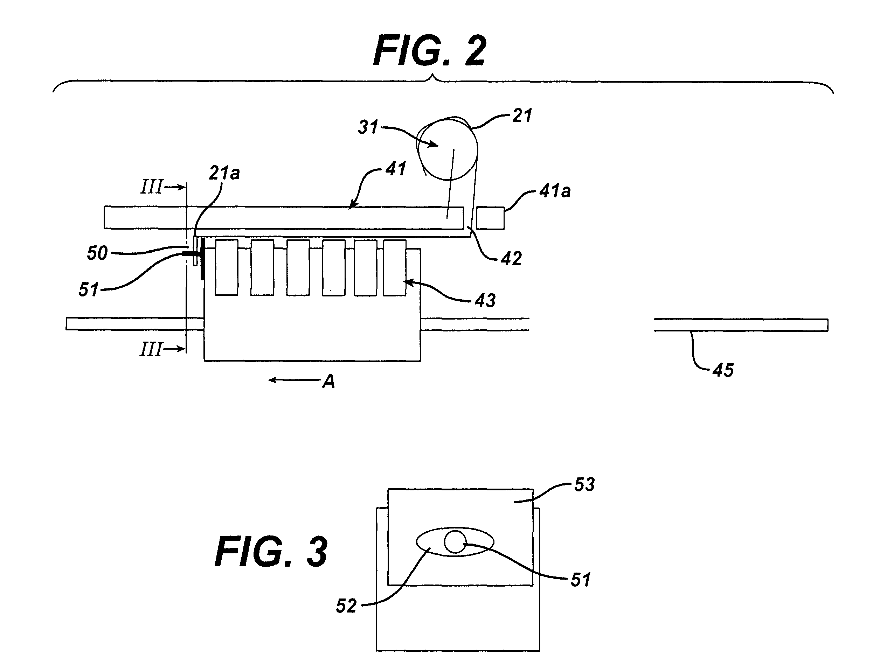

In a preferred embodiment, the receptacles are driven and their motion drives the belt through friction (between the receptacles and the belt). The drive for the receptacles can include a motor and a belt that transfer power from the motor to the receptacle/receptacle holder. In another preferred embodiment and motor worm gear combination can also be used. The receptacle/receptacle holder is preferably guided by a guide, such as guide rails. See, e.g., Figures 1 and 2. In an analyzer, the cuvettes may be transported on a cuvette conveyor such as shown in U.S. Patent Application Publication No. 2003/0022380 (hereinafter "the '380 application").

In another preferred embodiment, a backing support that faces or contacts the side of the pliable cover that is opposite the receptacle is provided. The support can be any structure capable of maintaining the cover in a position when it is pressed against the open end of the receptacles. In a preferred embodiment, the support is a backing plate. The backing support should have a width that is at least equal that of the receptacles to ensure adequate pressure can be applied by the cover against the receptacles to provide a satisfactory sealing relationship. The support can be any material capable of providing the required stiffness, such as metal or plastic.

The receptacles usable in the present invention can be any structure capable of holding a fluid, preferably a liquid. Single or multiple receptacles can be used. In a preferred embodiment, the receptacle is a cuvette. The cuvettes can be single or multiple read cuvettes. Preferred multiple read cuvettes are described in U.S. Des. 290,170 and U.S. Patent No. 4,639,135. In other embodiments, the receptacle can be a microtiter plate used in a microtiter plate assay. The receptacles can be removably located in a receptacle holder for transportation while the receptacles are in contact with the pliable cover. In one embodiment where the receptacle is a cuvette, the holder can be an incubator block capable of holding multiple cuvettes.

Alternatively, a strip assay configuration can be used, where individual cuvettes pass lengthwise through an incubator, such that the read windows of the cuvette face the direction perpendicular to the direction of travel. In such an embodiment, spectrophotomer or the like can be positioned to take readings through the cuvette when the cuvette is still sealed by the cover.

In another embodiment, the moving evaporation control cover can replace the evaporation control covers used on slide test elements as described in U.S. Patent Nos. 4,935,374 and 4,943,415.

A wiper can also be provided to remove any condensation or material that might accumulate on the surface of the sheets. The wiper is positioned to contact the cover and be biased slightly against the cover to provide a wiping action. In a preferred embodiment, the wiper is a plastic or metal having a stiffness sufficient to deflect the cover to ensure an adequate wiping effect. Also, maintaining the evaporation control cover temperature above the temperature of the fluid in the cuvette will eliminate or reduce condensation and thus reduce the need for a secondary wiper device. In this embodiment, a heating device could be provided to maintain the desired temperature of the evaporation control cover.

The moving evaporation control cover is preferably used in clinical diagnostic analyzers, such as the clinical chemistry analyzer described in, for example, in the '380 application, or in immunodiagnostic analyzers such as U.S. Patent No. 6,096,561 and EP-A-1 116 953.

Another aspect of the invention provides a method of eliminating or reducing evaporation from a fluid containing receptacle in a clinical analyzer. The method entails sealing the receptacle, such as a cuvette, with the pliable cover described above, while the receptacle is in the analyzer, preferably in the incubator of the analyzer. The receptacle is loaded into the analyzer and transported through the analyzer. At some point in the analyzer, preferably in the incubator, the receptacle and pliable cover are engaged in a sealing relationship. As the receptacle continues to move through the apparatus, the cover move with the receptacle to prevent all or any significant movement relative movement between the cover and receptacle. Upon moving together for a predetermined distance, the receptacle and the pliable cover become disengaged. After disengagement, the pliable cover may be wiped with a wiper before being reused to cover another receptacle. Alternatively, after moving a predetermined distance, the receptacle and pliable cover will reverse direction and become disengaged after moving to the same point they became engaged.

Reference will now be made to the non-limiting embodiments shown in the Figures.

Figure 1 describes one embodiment of the moving evaporation control cover 10 where the pliable cover is an endless belt. The apparatus includes a pliable endless belt 20 which sealingly engages cuvettes 43 in incubator block 44. The apparatus also includes a fixed backing support plate 41 which backs the belt opposite the cuvettes as they are passing through an incubator of a diagnostic analyzer. Rollers 30a, b are also included for providing the endless path for belt 20 to follow. As shown in Figure 1, roller 30b is powered by motor shown schematically as 33 which drives belt 20. Although not specifically shown in Figure 1, the incubator block is also driven by its own drive system, such as the cuvette conveyor described in the '380 application. Cuvette or incubator block guide rails 45 are also provided.

Figure 2 describes another embodiment of the moving evaporation control cover 10 where the pliable cover is a non-continuous sheet. The apparatus includes a sheet 21 which can be the same material as the belt 20 shown in Figure 1, except that the sheet 21 is not an endless belt. Instead, the sheet is wound up on roller 31, which can be spring loaded in a manner similar to a window shade spring roller and functions to maintain tension to keep the sheet in a wound configuration until the leading edge of the sheet is engaged by the receptacle or receptacle holder. In the embodiment shown in Figure 2, the leading edge of sheet 21a includes a mechanism 50 for engaging the sheet with the cuvette holding incubator block 44. As shown in Figure 3, the mechanism includes a separate tab portion 53 attached to the end of the sheet (alternatively, the tab portion could simply be the end of the sheet that is folded over itself to form a thickened portion) that includes a hole or slot 52. The hole or slot engages a rod 51 that is located on the leading edge of the cuvette holding incubator block. The embodiment of Figure 2 also includes a backing support or plate 41 as in Figure 1. In the Figure 2 embodiment, however, an additional section 41a is also included. This additional section 41a together with backing support 41 forms a slot 42. The sheet 21 is located in the slot. Due to its thickness, the tab portion 53 (Figure 3) of the sheet is prevented from passing through the slot and is held against the slot by the tensioning action of the roller 31. As shown in Figure 2, the rod 51 on the leading edge of cuvette holding incubator block passes in direction A, it will engage the slot 52 on tab 53 that is biased against the slot 52. As the incubator block moves past the evaporation control cover the sheet covers the cuvettes during incubation. At the end of the incubation cycle, the incubator block will reverse direction and the rod 51 will disengage from slot 52.

As noted above, the evaporation control cover according to the present invention is advantageously used in a clinical analyzer. Figure 4 depicts a portion of a clinical analyzer that includes the cuvettes 43 on a cuvette conveyor 58. The analyzer also includes cuvette metering station for metering sample and/or reagents into the conveyor, an incubator for incubating the cuvettes and a cuvette read station where an analyzer, such as a spectrophotomer or photometer is located to analyze the sample in the cuvette. All of these components are known in the art and are not specifically shown for sake of simplicity. The moving evaporation control cover 10 is located in the incubator to control evaporation during incubation.

It will be apparent to those skilled in the art that various modifications and variations can be made to the compounds, compositions and processes of this invention. Thus, it is intended that the present invention cover such modifications and variations, provided they come within the scope of the appended claims and their equivalents.

## Claims

1. A moving evaporation control cover for at least one fluid containing receptacle for use in a clinical analyzer, comprising:
a pliable cover capable forming a sealing relationship with the fluid containing receptacle, wherein said cover moves with said receptacle; and
one or more rollers in contact with the pliable cover.

2. A moving evaporation control cover and fluid containing receptacle, comprising:
at least one fluid containing receptacle;
a pliable cover capable forming a sealing relationship with the fluid containing receptacle, wherein the cover moves with the receptacle;
one or more rollers in contact with the pliable cover; and
at least one of:
a drive for moving the pliable cover; and
a drive for moving the fluid containing receptacle.

3. A moving evaporation control cover and fluid containing receptacle as claimed in claim 2, further comprising both the drive for moving the pliable cover, and the drive for moving the fluid containing receptacle.

4. A moving evaporation control cover and fluid containing receptacle as claimed in claim 3, wherein the drive for moving the pliable cover comprises a motor which drives the one or more rollers.

5. A moving evaporation control cover and fluid containing receptacle as claimed in any one of claims 2 to 4, further comprising:
a backing support on the side of the pliable cover which is opposite the fluid containing receptacles, wherein the backing support provides rigidity to the pliable cover when it contacts the fluid receptacles.

6. A moving evaporation control cover and fluid containing receptacle as claimed in any one of claims 2 to 5, wherein the pliable cover is an endless belt and further comprising at least two rollers, wherein the endless belt wraps around the rollers to reverse direction.

7. A moving evaporation control cover and fluid containing receptacle as claimed in any one of claims 2 to 5, wherein the pliable cover is a sheet rolled up around the roller and comprising a mechanism for engaging a leading edge of the sheet with the receptacle or a receptacle holder.

8. A moving evaporation control cover and fluid containing receptacle as claimed in claim 7, wherein the sheet unrolls from the roller as the receptacle or receptacle holder passes by the roller.

9. A moving evaporation control cover and fluid containing receptacle as claimed in any one of claims 2 to 8, further comprising a wiper for contacting the pliable cover and removing any liquid on the cover.

10. A moving evaporation control cover and fluid containing receptacle as claimed in any one of claims 2 to 9, wherein the receptacle is a cuvette for use in a diagnostic or chemical analyzer.

11. A moving evaporation control cover and fluid containing receptacle as claimed in claim 10, wherein the cuvettes are multiple cuvettes.

12. A moving evaporation control cover and fluid containing receptacle as claimed in any one of claims 2 to 9, wherein the receptacle is a microtiter plate or strip assay.

13. A moving evaporation control cover and fluid containing receptacle as claimed in any one of claims 2 to 12, wherein the drive for moving the fluid containing receptacle includes a fluid receptacle holder.

14. A clinical analyzer comprising:
a cuvette conveying station for moving one or more cuvettes through the analyzer;
a metering station for metering sample and/or reagents into the cuvettes;
an analyzer for analyzing the sample in the cuvettes; and
an incubator for incubating a sample in the cuvettes, wherein the incubator comprises, a pliable moving evaporation control cover capable of forming a sealing relationship with the cuvette containing the sample being incubated, and one or more guides in contact with the pliable cover to support and control the direction of the cover.

15. A clinical analyzer as claimed in claim 14, wherein the one or more guides are rollers.

16. A clinical analyzer as claimed in claim 14, wherein the one or more guides are guide rails.

17. A clinical analyzer as claimed in any one of claims 14 to 16, further comprising a drive for moving the pliable cover.

18. A clinical analyzer as claimed in any one of claims 14 to 17, wherein the pliable cover is an endless belt and further comprising: at least two rollers, wherein the endless belt wraps around the rollers to reverse direction; and a backing support on the side of the pliable cover which is opposite the cuvettes, wherein the backing support provides rigidity to the pliable cover when it contacts the cuvettes.

19. A clinical analyzer as claimed in claim 18, wherein the endless belt is rubber.

20. A method of eliminating or reducing evaporation from a fluid containing receptacle in an incubator of a clinical analyzer comprising:
providing a fluid containing receptacle having a sample to be analyzed in an incubator of a clinical analyzer;
providing a pliable cover for the fluid containing receptacle;
engaging the pliable cover and receptacle in a fluid sealing relationship with one another;
moving the sealed cover and receptacle a predetermined distance; and
disengaging the cover and receptacle.
